# FASCICULE DE BREVET EUROPEEN

(11) **EP 1 368 206 B1**
(45) Date de publication et mention de la délivrance du brevet: **15.10.2008**
(21) Numéro de dépôt: 02720056.7
(22) Date de dépôt: 12.03.2002
(51) Int. Cl.: B60G 21/05, B23K 20/06

(54) **FIXATION D'UNE TRAVERSE ET D'UN BRAS, NOTAMMENT POUR UN ESSIEU SEMI-RIGIDE**
BEFESTIGUNG EINES QUERTRÄGERS UND EINES LÄNGSARMS FÜR EINE VERBUNDLENKERACHSE
METHOD FOR FIXING A CROSSPIECE AND AN ARM, PARTICULARLY FOR A SEMI-RIGID AXLE

(30) Priorité: 15.03.2001 FR 0103550
(43) Date de publication de la demande: 10.12.2003
(73) Titulaire: VALLOUREC COMPOSANTS AUTOMOBILES VITRY, 51300 Vitry le Francois (FR)
(72) Inventeur: DESLANDE, Raymond, F-51300 Loisy sur Marne (FR); EVEN, Lydie, 130 00 Praha 3 (CZ); PANOZZO, Régis, F-51300 Vitry le Francois (FR)
(74) Mandataire: Plaçais, Jean Yves
(86) Numéro de dépôt international: PCT/FR2002/000878
(87) Numéro de publication internationale: WO 2002/074565

(56) Documents cités:
- FR-A- 2 766 422
- US-A- 5 966 813
- US-A- 5 981 921
- US-A- 6 099 084

## Description

L'invention concerne la fixation de bras à la traverse d'un essieu, en particulier dans des essieux semi-rigides pour véhicules automobiles de tourisme.

Un essieu de ce type comprend deux bras longitudinaux destinés à être reliés chacun d'une part à une roue du véhicule et d'autre part à la caisse. Un tel essieu est décrit par exemple dans US 5,966,813. Les bras sont fixés chacun à l'extrémité d'une traverse qui s'étend dans la largeur du véhicule et qui est relativement rigide en flexion et souple en torsion. Habituellement, cette fixation s'effectue par boulonnage ou par soudage (souvent par l'intermédiaire d'un insert lorsque le bras est en matériau peu soudable), après avoir ajusté, avec la plus grande précision possible, les positions respectives des bras et de la traverse.

Le document US 6,099,084 décrit un essieu dans lequel un bras et une traverse sont reliés entre eux au niveau d'une pièce de connexion du bras. La liaison est assurée en pressant une portion de la traverse entourant la pièce de connexion contre celle-ci, jusqu'à l'obtention d'un serrage approprié.

De tels essieux sont généralement réputés pour être légers, économiques et d'assemblage rapide.

Néanmoins, les fixations précitées, connues, en augmentent le poids et compliquent le procédé de leur fabrication, alors que le respect des conditions d'endurance et le maintien des positions relatives des bras et de la traverse, même après fixation, restent impératifs.

La présente invention vient améliorer la situation.

Elle propose à cet effet un procédé de fabrication d'essieux,

D'autres caractéristiques du procédé sont indiquées dans les revendications 2 à 12.

Préférentiellement, seul l'élément qui fait partie de l'ébauche de bras possède une forme non de révolution, par exemple polygonale, elliptique, multi-lobes, circulaire à rainures, crantée ou cannelée.

Le matériau déformé par magnéto-formage est choisi pour posséder une ductilité suffisante aux vitesses de déformations considérées.

Le terme "ébauche" (de bras ou de traverse) désigne la pièce brute qui est destinée à être déformée par magnéto-formage. Dans ce qui suit, cette distinction est volontairement omise, par soucis de simplification.

D'autres caractéristiques et avantages de l'invention apparaîtront à l'examen de la description détaillée ci-après, et des dessins annexés sur lesquels :
- la figure 1 représente un essieu semi-rigide courant ;
- la figure 2 représente une vue de détail d'un bras et d'une ébauche de traverse semi-rigide, disposés pour être fixé à l'un à l'autre selon un premier mode de réalisation de la présente invention ;
- les figures 3A et 3B représentent très schématiquement des vues respectives en coupe longitudinale et en coupe transversale de l'extrémité 5 de l'ébauche de traverse 1 (figure 2) dans son logement 4, pendant l'opération de magnéto-formage selon le premier mode de réalisation de l'invention ;
- la figure 4 représente très schématiquement une vue en coupe longitudinale de l'extrémité 4 de l'ébauche de la traverse 1, dans un mode de réalisation qui n'est pas selon l'invention ;
- la figure 5 représente un détail d'une vue éclatée d'un bras 2 et d'une ébauche de traverse 1, selon le second mode de réalisation de la figure 4 ;
- les figures 6A et 6B représentent schématiquement des opérations de fixation de traverses en matériau composite comprenant une bague conductrice interne et externe, respectivement; et
- la figure 7 représente une variante de la réalisation représentée sur la figure 3B et selon laquelle l'un des éléments (le logement 4 dans l'exemple représenté) présente une forme dénuée de symétrie de révolution.

Les dessins contiennent, pour l'essentiel, des éléments de caractère certain. Ils pourront donc non seulement servir à mieux faire comprendre la description, mais aussi contribuer à la définition de l'invention, le cas échéant.

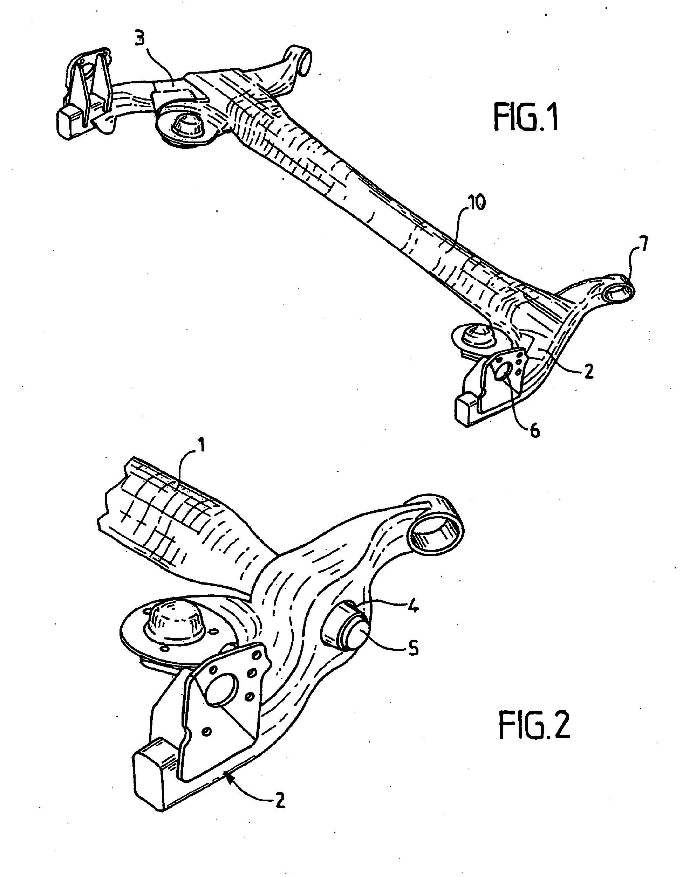

On se réfère tout d'abord à la figure 1 qui représente un essieu semi-rigide (dit également "déformable"), destiné à opérer à l'arrière d'un véhicule automobile, et qui comprend une traverse 1 assemblée sur deux bras sensiblement symétri ques 2 et 3. Aux extrémités de chaque bras 2,3, on voit, d'une part, une plaque 6 qui est en principe destinée à recevoir une fusée porte-roue et, d'autre part, un évidement 7 qui, lui est en principe destiné à recevoir une articulation élastique de liaison à la caisse. La traverse 10 est de section non circulaire et non constante, comme on peut le voir sur la figure 1, pour être suffisamment rigide en flexion, souple en torsion et endurante aux efforts en service.

On décrit ci-après un assemblage de l'un des bras sur une extrémité de la traverse, mais le procédé peut s'appliquer aussi bien à l'assemblage des deux bras 2 et 3 sur les extrémités de la traverse 10.

Cependant, cet assemblage est généralement délicat dans la conception et la fabrication, en particulier lorsque les matériaux utilisés ne sont pas soudables entre eux (traverse, d'une part, et bras, d'autre part), par des moyens courants de fabrication. Typiquement, une traverse peut être en acier, tandis que les bras sont en fonte ou en aluminium.

La soudure forme généralement une zone de faiblesse de l'essieu, notamment pour des sollicitations cycliques.

Lorsque l'on souhaite souder des bras sur une traverse réalisée dans un matériau différent, une solution connue consiste à utiliser un "insert". Le bras, proprement dit, est coulé sur un insert en même matériau que la traverse (acier notamment) et la traverse est soudée sur cet insert.

Cette technique présente un inconvénient relatif au nombre d'étapes supplémentaires à prévoir pour assurer une fixation fiable. De plus, le soudage crée, de façon générale, des déformations et des contraintes thermiques dont le résultat peut se manifester par un écart, par rapport à une tolérance prévue, de l'angle de carrossage, ou encore de l'angle de pince d'une roue destinée à être montée sur une fusée porte-roue reliée au bras.

Une autre solution connue consiste à prévoir un boulonnage du bras à la traverse. Une plaque d'acier, en général percée de trous de passage de vis, est soudée perpendiculairement à l'extrémité de la traverse. Celle-ci est aussi usinée perpendiculairement à l'axe de la traverse après soudure. Parallèlement, des taraudages et une face d'appui sont usinés dans le bras. Enfin, l'ensemble traverse-bras est assemblé par des vis.

On comprend aisément que cette solution augmente considérablement le poids de l'essieu semi-rigide et en complique la structure.

Plus généralement, les solutions connues pour fixer un bras d'un essieu semi-rigide à une traverse sont difficiles à mettre en oeuvre, en particulier pour respecter les conditions d'endurance requises, ce qui grève généralement leur coût de fabrication.

Les essieux doivent en effet respecter à la fois des impositions statiques qui définissent le comportement routier de l'essieu et des impositions dynamiques (endurance de l'essieu/essais de fatigue).

Des essais dits "ESTR" sont par exemple réalisés sur des essieux complets montés sur une caisse bridée de véhicule automobile, les sollicitations étant exercées par de fausses roues pour simuler divers comportements routiers selon un cahier des charges propre à chaque véhicule.

La Demanderesse a alors mis en oeuvre un procédé selon l'invention faisant intervenir une fixation par magnéto-formage. Des difficultés de mise en oeuvre de ce procédé se sont néanmoins manifestées. Cependant, des avantages incontestables en ont découlé, lorsque ces difficultés ont été surmontées.

Tout d'abord, une difficulté liée à l'encombrement du bras, de par sa forme, a du être surmontée. Il a fallu fournir des dispositifs de magnéto-formage suffisamment puissants, mais de taille suffisamment réduite, aussi, pour opérer dans un environnement restreint. Parallèlement, il a fallu procurer des éléments (globalement tubulaires creux) qui aient, à la fois, une souplesse mécanique permettant d'être déformé par magnéto-formage et de résister aux contraintes usuelles, lorsque le véhicule équipé d'un tel essieu semi-rigide est en service.

Il est proposé ci-après plusieurs solutions permettant de surmonter de telles difficultés, correspondant à des modes de réalisation différents.

En se référant à la figure 2, l'ensemble bras/ébauche de traverse comprend une protubérance 5 dont la surface extérieure est en correspondance avec une surface intérieure d'un logement 4 de la protubérance 5 précitée.

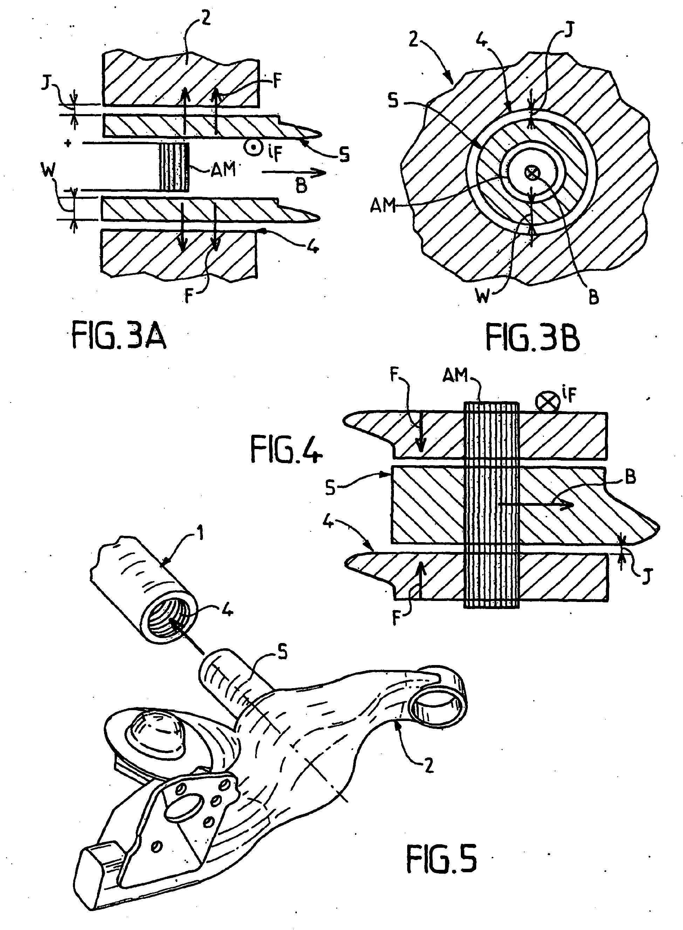

Dans le premier mode de réalisation représenté sur la figure 2, l'ébauche de traverse 1 se prolonge, en son extrémité, par une partie tubulaire restreinte. Dans ce premier mode de réalisation, l'extrémité 5 constitue une protubérance sensiblement cylindrique creuse, comme on le voit sur les figures 3A et 3B. De son côté, le bras 2 comprend une ouverture 4 formant logement pour l'extrémité 5 de l'ébauche de traverse 1.

En se référant aux figures 3A et 3B pour réaliser la fixation de l'ébauche de traverse au bras, un élément électromagnétique AM (schématisé par quelques spires) est introduit dans la partie creuse de l'extrémité 5 de l'ébauche de traverse 1, afin de créer un champ magnétique et générer ainsi un champ de forces F capables de déformer l'extrémité 5 de l'ébauche de traverse, de sorte que les parois (d'épaisseur choisie W) de l'extrémité creuse 5 viennent en contact interférant avec le logement 4 aménagé dans le bras 2. Comme on le remarque sur les figures 3A et 3B, un jeu J (préférentiellement de l'ordre de 0,5 mm) est laissé entre les parois de l'extrémité creuse 5 et du logement 4, ce qui permet de positionner, avec précision, l'ébauche de traverse par rapport au bras, avant fixation définitive.

Comme le montre les figures 3A et 3B, ainsi que la figure 4 (que l'on décrira en détail plus loin), ce jeu J est laissé sur la différence des rayons respectivement interne du logement et externe de la protubérance.

Bien entendu, l'épaisseur W à prévoir pour les parois de l'extrémité 5 de la traverse dépend du jeu J, des caractéristiques physiques et métallurgiques du matériau de l'extrémité 5 et de la résistance voulue de l'extrémité aux sollicitations en service et des caractéristiques électriques de l'élément électromagnétique AM.

Avantageusement, l'épaisseur choisie W est relativement faible (sensiblement égale ou inférieure à 5mm, préférentiellement inférieure ou sensiblement égale à 3mm) de sorte que la déformation, plus facile, nécessite peu d'énergie à développer par magnéto-formage et tolère un matériau moyennement conducteur électrique tel que l'acier. Une épaisseur trop faible ne permet pas de résister aux sollicitations statiques ou cycliques en service.

L'extrémité de l'ébauche de traverse peut être cylindrique de révolution ou non. Le logement prévu dans le bras peut être aménagé pour recevoir cette extrémité de l'ébauche de traverse, avec usinage ou non, le jeu J étant laissé entre les surfaces respectives de l'extrémité de l'ébauche de traverse et de son logement.

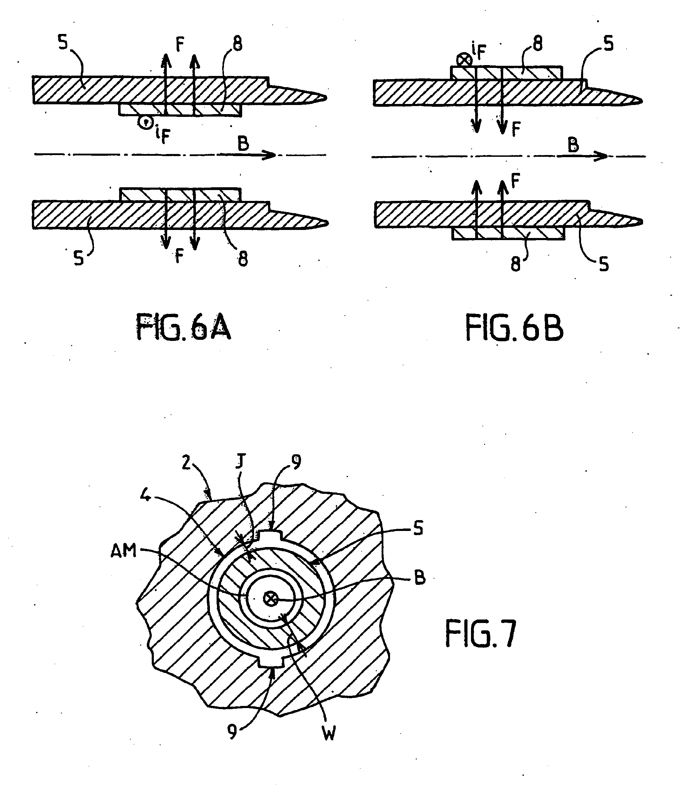

Le logement prévu peut être de forme cylindrique, de révolu tion ou non. La figure 7 montre d'ailleurs une variante de réalisation dans laquelle le logement 4 possède une forme cylindrique rainurée longitudinalement par deux rainures 9. L'extrémité 5 de l'ébauche de traverse est, en revanche, cylindrique de révolution. Pendant l'opération de magnéto-formage, l'extrémité 5 gonflée par la déformation vient avantageusement s'imprimer dans les rainures 9 du logement. Il en résulte un verrouillage en rotation de l'assemblage résultant. On prévoit également des rainures annulaires (non représentées) sur le logement 4 pour verrouiller l'assemblage en translation. D'autres formes de non-révolution peuvent être prévues, par exemple polygonale, elliptique, à plusieurs lobes, circulaire crantée ou cannelée.

L'étape c) du procédé selon l'invention utilise une technique de déformation de pièces métalliques à haute énergie (magnéto-formage). L'application d'une impulsion de champ magnétique intense dans une première pièce tubulaire permet de créer des courants de Foucault i_{F} circulaires à la surface de la pièce dont l'interaction avec le champ magnétique permet de repousser violemment la matière (acier, aluminium, fonte, etc) de la première pièce tubulaire (extrémité 5 de l'ébauche de traverse dans le premier mode de réalisation décrit ci-avant), jusqu'à lui faire épouser la forme d'une seconde pièce (logement 4 constitué dans le bras), avec laquelle on souhaite établir une liaison forte, de type soudure mais à froid.

Ainsi, l'élément électromagnétique AM schématisé par quelques spires est alimenté électriquement (signes + et -) de façon très brutale à l'aide d'une source prévue à cet effet (généralement une batterie de condensateurs). La variation du champ magnétique B (figure 3A) crée la force de magnéto-formage qui dilate l'extrémité 5 de l'ébauche de traverse, laquelle vient alors se sertir dans le logement 4 du bras. La déformation se fait à très grande vitesse sans retour élastique. Ici, les surfaces respectives de l'extrémité de la traverse et de son logement, après l'étape de fixation par magnéto-formage, sont interpénétrées au niveau des couches atomiques superficielles : on parle alors, par opposition, de "soudure à froid" entre la traverse et le bras.

Le logement précité est préférentiellement usiné pour définir une surface de contact précise, ce qui permet d'orienter avec précision la traverse par rapport aux bras. En revanche, il n'est pas utile d'avoir une grande précision sur la surface de l'extrémité de l'ébauche de traverse, avantageusement. En effet, dans les autres techniques d'assemblage (soudure, boulonnage, etc), ces zones d'accostage doivent généralement être définies de façon très précise.

La fixation par magnéto-formage dans le procédé selon l'invention offre notamment l'avantage de supprimer des opérations dans les procédés de l'art antérieur, ces opérations consistant à conformer précisément les extrémités de l'ébauche de traverse avant assemblage aux bras.

De plus, sur un essieu complet, ce procédé permet de rattraper tous les défauts accumulés sur chaque composant et ainsi s'affranchir d'une étape finale des procédés connus qui consistent à corriger la géométrie du train du véhicule pour rattraper les tolérances prescrites.

Un dispositif de magnéto-formage apte à de telles déformations est décrit par exemple dans l'article de J.P.Collaudin et G.Faller dans la revue "métaux déformation" N°68 (septembre-octobre 1981). A ce titre, le contenu de cet article est à considérer comme faisant partie intégrante de la description, à toutes fins utiles.

Dans un mode de réalisation qui n'est pas selon l'invention représenté sur les figures 4 et 5, le bras comprend un téton 5 qui vient se loger dans une extrémité tubulaire 4 de l'ébauche de traverse 1 formant logement. Un champ magnétique génère des forces qui viennent plaquer l'extrémité 4 de l'ébauche de traverse 1 contre le téton 5 que comporte le bras 2. Dans ce second mode de réalisation, l'élément électromagnétique AM est un élément entourant l'extérieur de l'extrémité 4 de l'ébauche de traverse (bobine encerclante schématisée ici par quelques spires).

Ainsi, le procédé selon l'invention utilise une étape de magnéto-formage qui permet de fixer entre elles des pièces réalisées dans des matériaux non soudables de manière standard "à chaud", sans alourdir l'essieu. La mise en oeuvre de ce procédé est alors beaucoup plus simple que celles des autres procédés habituels.

Une autre application possible est particulièrement avantageuse pour une traverse en matériau composite 5 avec une bague annulaire 8 en cuivre ou en aluminium, qui sont des matériaux bon conducteurs, sur la surface intérieure ou sur la surface extérieure de l'extrémité de l'ébauche de traverse 5, comme le montrent respectivement les figures 6A et 6B.

Bien entendu, la présente invention ne se limite pas à la forme de réalisation décrite ci-avant à titre d'exemple ; elle s'étend à d'autres variantes.

Ainsi, on comprendra que le dispositif dont l'utilisation est prévue ci-avant, avec une bobine interne ou une bobine externe, est décrit à titre d'exemple. D'autres dispositifs (qui prévoient par exemple l'utilisation de deux bobines à la fois, interne et externe) peuvent être utilisés dès lors qu'ils respectent les conditions d'encombrement des essieux en cours de fabrication, et qu'ils assurent les forces magnétiques requises pour la déformation des matériaux.

Le procédé selon l'invention s'applique de façon particulièrement avantageuse à la fixation de bras (notamment en fonte) à des traverses de forme tubulaire.

L'application est d'autant plus avantageuse lorsque la pièce déformée est en métal très conducteur électriquement.

## Revendications

1. Procédé de fabrication d'essieux, notamment d'essieux semi-rigides munis d'une traverse et de bras assemblés aux extrémités de la traverse, le procédé comprenant les étapes suivantes :
a) préparer une ébauche de traverse (1) et au moins une ébauche de bras (2) comprenant un logement (4), en utilisant, pour une partie au moins des ébauches (4, 5), au moins un matériau métallique,
b) introduire une extrémité creuse de l'ébauche de traverse (5) formant protubérance dans le logement de l'ébauche de bras, un jeu (J) étant laissé entre la protubérance et son logement, et ajuster les positions relatives desdites ébauches,
c) introduire dans la traverse un élément électromagnétique (AM) capable de générer un champ magnétique (B) pour gonfler sensiblement, par magnéto-formage, l'extrémité de l'ébauche de la traverse (5) dans son logement (4) pour fixer rigidement lesdites ébauches ensemble.

2. Procédé selon la revendication 1, **caractérisé en ce qu'**au moins un élément parmi la protubérance et le logement possède une forme dénuée de symétrie de révolution.

3. Procédé selon la revendication 2, **caractérisé en ce que** seul l'élément qui fait partie de l'ébauche de bras possède une forme dénuée de symétrie de révolution.

4. Procédé selon l'une des revendications précédentes, **caractérisé en ce que** le jeu laissé (J) est voisin de 0,5 mm entre rayons de protubérance et de logement.

5. Procédé selon l'une des revendications précédentes, **caractérisé en ce que** l'étape a) prévoit une préparation des ébauches en conformant le logement ou la protubérance avec des parois d'épaisseurs choisies (W) pour se déformer suffisamment pendant l'étape c) tout en supportant les efforts prévus pour un essieu en service.

6. Procédé selon la revendication 5, **caractérisé en ce que** lesdites épaisseurs choisies (W) sont sensiblement égales ou inférieures à 5mm.

7. Procédé selon l'une des revendications précédentes, **caractérisé en ce que** le bras (2,3) et la traverse (1) sont destinés à être réalisés dans des matériaux différents.

8. Procédé selon l'une des revendications précédentes, **caractérisé en ce que** le bras (2,3) est réalisé dans un matériau non - ou pet - soudable.

9. Procédé selon l'une des revendications précédentes, **caractérisé en ce que** la traverse est réalisée dans un matériau peu - ou non - conducteur, et **en ce qu'**une partie d'extrémité de la traverse comprend une bague réalisée dans un matériau très conducteur.

10. Procédé selon la revendication 9, **caractérisé en ce** ladite bague est à l'intérieur de l'extrémité de la traverse.

11. Procédé selon la revendication 9 ou 10, **caractérisé en ce que** la traverse est réalisée dans un matériau composite.

12. Procédé selon l'une des revendications précédentes, **caractérisé en ce que** l'étape b) comprend des réglages définitifs de paramètres de conformation de l'essieu tels que la définition d'un angle de pince d'une roue destinée à être montée sur l'essieu et/ou d'un angle de carrossage.

## Claims

1. Method for production of axles, in particular semi-rigid axles fitted with a crossmember and arms assembled on the ends of the crossmember, the method comprising the following steps:
a) preparation of a crossmember blank (1) and at least one arm blank (2) comprising a housing (4), using for at least part of the blanks (4, 5) at least one metal material,
b) introduction of a hollow end in the crossmember blank (5) forming a protuberance in the housing of the arm blank, leaving a clearance (J) between the protuberance and its housing, and adjusting the relative positions of said blanks,
c) introduction into the crossmember of an electromagnetic element (AM) able to generate a magnetic field (B) to inflate approximately, by magneto-forming, the end of the crossmember blank (5) in its housing (4) in order to fix said blanks rigidly together.

2. Method according to claim 1, **characterised in that** at least one element of the protuberance and the housing has a form without symmetry of revolution.

3. Method according to claim 2, **characterised in that** only the element which forms part of the arm blank has a form without symmetry of revolution.

4. Method according to any one of the preceding claims, **characterised in that** the clearance (J) left is close to 0.5 mm between the radii of the protuberance and of the housing.

5. Method according to any one of the preceding claims, **characterised in that** step a) provides a preparation of blanks by configuring the housing or the protuberance with walls of selected thickness (W) to deform sufficiently during step c) while resisting the forces expected for an axle in service.

6. Method according to claim 5, **characterised in that** said selected thicknesses (W) are approximately equal to or less than 5 mm.

7. Method according to any one of the preceding claims, **characterised in that** the arm (2, 3) and the crossmember (1) are intended to be produced from different materials.

8. Method according to any one of the preceding claims, **characterised in that** the arm (2, 3) is made from a material with little or no weldability.

9. Method according to any one of the preceding claims, **characterised in that** the crossmember is made from a material with little or no conductivity, and that part of the end of the crossmember comprises a ring made of a material of high conductivity.

10. Method according to claim 9, **characterised in that** said ring is inside the end of the crossmember.

11. Method according to claim 9 or 10, **characterised in that** the crossmember is made of a composite material.

12. Method according to any one of the preceding claims, **characterised in that** step b) comprises definitive adjustments of axle configuration parameters such as definition of a clamping angle of a wheel intended to be mounted on the axle and/or a bodywork angle.

## Patentansprüche

1. Verfahren zur Herstellung von Achsen, insbesondere von halbstarren Achsen, die mit einem Querträger und mit Armen versehen sind, die an den Enden des Querträgers angeordnet sind, wobei das Verfahren die folgenden Schritte aufweist:
a) Bereitstellen eines Querträgerrohlings (1) und wenigstens eines Armrohlings (2), der eine Aufnahme (4) aufweist, unter Verwendung wenigstens eines metallischen Materials für wenigstens einen Abschnitt der Rohlinge (4, 5),
b) Einführen eines hohlen Endes des Querträgerrohlings (5), das einen Vorsprung in der Aufnahme des Armrohlings bildet, wobei ein Spielraum (J) zwischen dem Vorsprung und seiner Aufnahme belassen wird, und Einstellen der Relativpositionen der Rohlinge,
c) Einführen in den Querträger eines elektromagnetischen Elements (AM), das in der Lage ist, ein magnetisches Feld (B) zu erzeugen, um, durch Magnetverformung, das Ende des Rohlings des Querträgers (5) in seiner Aufnahme (4) aufzublähen, um die Rohlinge starr miteinander zu befestigen.

2. Verfahren nach Anspruch 1, **dadurch gekennzeichnet, dass** wenigstens eines der Elemente Vorsprung und Aufnahme eine Form aufweist, die nicht drehsymmetrisch ist.

3. Verfahren nach Anspruch 2, **dadurch gekennzeichnet, dass** nur das Element, das Teil des Armrohlings ist, eine Form aufweist, die nicht drehsymmetrisch ist.

4. Verfahren nach einem der vorhergehenden Ansprüche, **dadurch gekennzeichnet, dass** der belassene Spielraum (J) sich in der Nähe von 0,5 mm zwischen den Radien des Vorsprungs und der Aufnahme befindet.

5. Verfahren nach einem der vorhergehenden Ansprüche, **dadurch gekennzeichnet, dass** der Schritt a) eine Vorbereitung der Rohlinge vorsieht unter Bilden der Aufnahme oder des Vorsprungs mit Seitenwänden von ausgewählter Dicke (W), um sich während des Schrittes (c) ausreichend zu verformen, unter Aufnahme der vorgesehenen Kräfte für eine Achse im Betrieb.

6. Verfahren nach Anspruch 5, **dadurch gekennzeichnet, dass** die gewählten Dicken (W) im Wesentlichen gleich oder geringer als 5 mm sind.

7. Verfahren nach einem der vorhergehenden Ansprüche, **dadurch gekennzeichnet, dass** der Arm (2, 3) und der Querträger (1) dazu bestimmt sind, aus unterschiedlichen Materialien hergestellt zu sein.

8. Verfahren nach einem der vorhergehenden Ansprüche, **dadurch gekennzeichnet, dass** der Arm (2, 3) aus einem nicht oder nur gering schweißbaren Material gebildet ist.

9. Verfahren nach einem der vorhergehenden Ansprüche, **dadurch gekennzeichnet, dass** der Querträger aus einem wenig oder nicht leitenden Material gebildet ist, und dass nur ein Teil des Endes des Querträgers einen Ring aufweist, der aus einem sehr gut leitenden Material gebildet ist.

10. Verfahren nach Anspruch 9, **dadurch gekennzeichnet, dass** der Ring sich im Inneren des Endes des Querträgers befindet.

11. Verfahren nach Anspruch 9 oder 10, **dadurch gekennzeichnet, dass** der Querträger aus einem Verbundmaterial gebildet ist.

12. Verfahren nach einem der vorhergehenden Ansprüche, **dadurch gekennzeichnet, dass** der Schritt b) endgültige Einstellungen von Gestaltungsparametern der Achse aufweist, wie der Definition eines Zangenwinkels eines Rades, das dazu bestimmt ist, auf der Achse montiert zu werden und/oder eines Radsturzwinkels.
